# EUROPEAN PATENT SPECIFICATION

(11) **EP 3 557 112 B1**
(45) Date of publication and mention of the grant of the patent: **02.09.2020**
(21) Application number: 18168341.8
(22) Date of filing: 19.04.2018
(51) Int. Cl.: F16M 11/10, F16M 11/04, G06F 1/16

(54) **FAST DETACHABLE PLACEMENT SEAT STRUCTURE FOR DISPLAY**
SCHNELL ABNEHMBARE PLATZIERUNGSSITZSTRUKTUR FÜR DISPLAY
STRUCTURE DE SIÈGE DE PLACEMENT AMOVIBLE RAPIDE POUR AFFICHAGE

(43) Date of publication of application: 23.10.2019
(73) Proprietor: EBN Technology Corp., 221 New Taipei City (TW)
(72) Inventor: LIU, Tze-Yang, 221 New Taipei City (TW); LIN, Ding-Shiuan, 221 New Taipei City (TW); LIAU, Wei-Shiang, 221 New Taipei City (TW)
(74) Representative: Lang, Christian

(56) References cited:
- US-A1- 2009 185 341
- US-A1- 2009 294 599
- US-A1- 2011 205 032
- US-B1- 6 502 792

## Description

### Technical Field

The present invention relates to a placement seat of a flat panel PC/ Display used in an electronic device, and in particular to a fast detachable placement seat structure for a display, that is compact in structure, easy to assemble, and detach without the need of using tools, as to fulfill the common needs of serviceability

### Background Art

In general, the bottom of a flat panel PC/ Display is provided with a placement seat for support, so that in application, the flat panel PC/ Display is able to stand upright, to show data and pictures, for the convenient viewing by the spectators. Presently, the flat panel PC/ Display is used extensively in the various electronic devices, such as industrial control instrument, man-machine interface, Point of Sale, multi-function printer, vehicle GPS, communication device, telephone system, intelligent household equipment, and medical care device., and desktop/countertop kiosk

Presently, along with the progress of the manufacturing Industry, most of the electronic devices adopt a flat design, and that uses an All-In-One concept to put all the functions into a unit, so that their functions are enhanced, while their sizes are made to be compact. However, the placement seat structure placed at the bottom of the flat panel PC/ Display still lacks major improvements.

The fact is that, the connection structure and design for the flat panel PC/ Display and the conventional placement seat is rather complicated. In this conventional design, an inner plate is placed on the back side of the flat panel PC/ Display, and at least 4 to 6 locking holes are provided on the inner plate As such, in assembling the placement seat, at least 4 to 6 screw bolts have to be used for fixing, such that the assembly process is time consuming, requiring more material, and the cost is high. In addition, in assembling and detaching the placement seat, screw driver has to be used, that could cause quite inconvenience and possible problems for the staff of assembly and maintenance. Additionally, some specific training hours for the maintenance staffs would consume the time and cost.

Moreover, though most of the electronic devices adopt a flat design, yet different cablings are required to use between various different electronic devices. Since in the prior art, the flat panel PC/ Display and the supporting placement seat are designed and sold together in pairs, such that in case the original flat panel PC/ Display has to be replaced by a new flat panel PC/ Display, the original cablings to the placement seat must be detached and rearranged accordingly. In this regard, for the big corporations, government institutions, and super markets, the system updates for quite a lot of the electronic devices can be rather time consuming, inconvenient, and problematic. Document US6502792 B1 discloses a seat structure for a display.

Therefore, presently, the design and performance of a placement seat is not quite satisfactory, and it leaves much room for improvement.

### Summary of invention

In view of the problems and drawbacks of the prior art, the present invention provides a fast detachable placement seat structure for a display, that is compact in structure, easy to assemble and detach without the need of using tools, to overcome the deficiency of the conventional placement seat.

In order to achieve the objective mentioned above, the present invention provides a fast detachable placement seat structure for a display, comprising: a flat panel PC/ Display and a placement seat. The placement seat includes: a support plate, a bottom seat, a cable placement portion, and a fast detachable mechanism. The fast detachable mechanism includes at least a fastening portion, and at least a locking portion. The flat panel PC/ Display is disposed in an electronic device. The placement seat is disposed below and connected to the flat panel PC/ Display. Wherein, the bottom base is connected to the support plate to form an angle with the support plate, and is used for receiving circuits, and a cable inlet end is disposed at one side of the bottom base. The cable placement portion is disposed between the support plate and the bottom base. The fast detachable mechanism is disposed on the support plate, and is located between the support plate and a back side of the flat panel PC/ Display. The at least a fastening portion is formed by at least a recess on the support plate, and at least a pillar on the back side of the flat panel PC/ Display. The at least a locking portion is formed by at least a through hole on the support plate, and at least a screw hole piece on the back side of the flat panel PC/ Display, for a screw bolt to insert through the through hole and the screw hole piece, to be locked and fixed in the screw hole piece.

In the descriptions above, the electronic device includes a main body and a flat panel PC/ Display, and the flat panel PC/ Display is a liquid crystal display. The electronic device is of a flat type incorporating all functions into a single unit (All-In-One), and that is selected from one of the following group consisting of an industrial control instrument, a man-machine interface, a Point of Sale, a multi-function printer, a vehicle GPS, a communication device, a telephone system, an intelligent household equipment, and a medical care device.

In the descriptions above, the recess is located on the support plate, while the pillar is disposed on a back side of the flat panel PC/ Display corresponding to the recess.

In the descriptions above, two recesses are disposed respectively on a left side and a right side on an upper rim of the support plate, and two pillars are disposed respectively at a left position and a right position on the back side of the flat panel PC/ Display, and correspond respectively to the two recesses.

In the descriptions above, the screw hole piece is located on the back side of the flat panel PC/ Display, and the through hole is located on the support plate of the placement seat corresponding to the screw hole piece, for a screw bolt to insert through the through hole and the screw hole piece, to be locked and fixed in the screw hole piece.

In the descriptions above, the through hole can be in a form of step hole, the screw hole piece is formed by the through hole and a screw hole plate (not shown) outside and inside the back side of the flat panel PC/ Display respectively, and a screw hole is provided in the center of the screw hole plate. The screw bolt of the locking portion can be a minus screw bolt, a plus screw bolt, or a hand screw bolt, so that screw bolt can be locked and unlocked through using a coin or through rotation by a hand.

In the descriptions above, the pillar of the fastening portion can be a fixed type pillar or a movable type pillar. The fixed type pillar is located directly on the back side of the flat panel PC/ Display; while the movable type pillar can be fixed onto the screw hole piece on the back side of the flat panel PC/ Display through using the screw bolt.

In the descriptions above, the fast detachable mechanism can be designed into a reverse configuration. By way of example, the pillar of the fastening portion can be rearranged to dispose on the support plate of the placement seat, while the recess can be rearranged to locate on the back side of the flat panel PC/ Display. Moreover, the screw hole piece of the locking portion can be rearranged to locate on the support plate of the placement seat, while the through hole can be located correspondingly on the back side of the flat panel PC/ Display, for the screw bolt to insert through the through hole and the screw hole piece, to be locked and fixed in the screw hole piece. In this approach, the fast detachable placement seat structure for a display can be used to achieve the same effect of the original configuration as mentioned earlier. (Compared with the descriptions in the last three paragraphs above, the descriptions in this paragraph involve only location rearrangements for the related elements, so there is no need to show them in different drawings for brevity).

Compared with the Prior Art, the fast detachable placement seat structure for a display of the present invention is able to achieve fewer components required, compact structure, and convenient assembly / detachment, to reduce production cost significantly, while saving installation and maintenance time. As such, the fast detachable placement seat structure for a display can be utilized in various electronic devices having flat panel PC/ Displays.

Further scope of the applicability of the present invention will become apparent from the detailed descriptions given hereinafter. However, it should be understood that the detailed descriptions and specific examples, while indicating preferred embodiments of the present invention, are given by way of illustration only, since various changes and modifications within the spirit and scope of the present invention will become apparent to those skilled in the art from the detailed descriptions.

### Brief description of drawings

The related drawings in connection with the detailed descriptions of the present invention to be made later are described briefly as follows, in which:
Fig. 1 is an exploded view of a fast detachable placement seat structure for a display according to the present invention;
Figs. 2A and 2B are plan views of a support plate according to the present invention;
Fig. 3 is a perspective view of an assembled fast detachable placement seat structure for a display according to the present invention;
Fig. 4 is a plan view of an assembled fast detachable placement seat structure for a display according to the present invention;
Fig. 5 is a cross section view of an assembled fast detachable placement seat structure for a display according to the present invention; and
Fig. 6 is a side view of a fast detachable placement seat structure for a display in application according to the present invention.

### Description of embodiments

The purpose, construction, features, functions and advantages of the present invention can be appreciated and understood more thoroughly through the following detailed description with reference to the attached drawings.

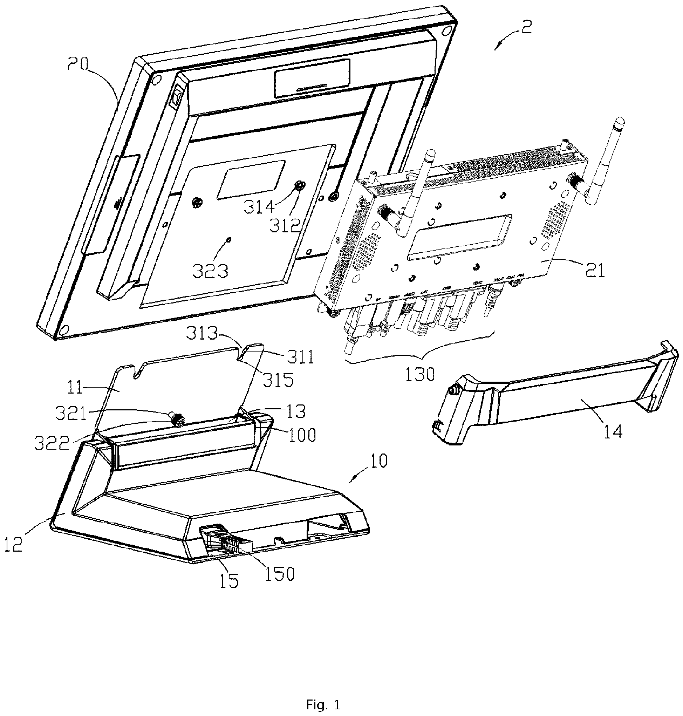

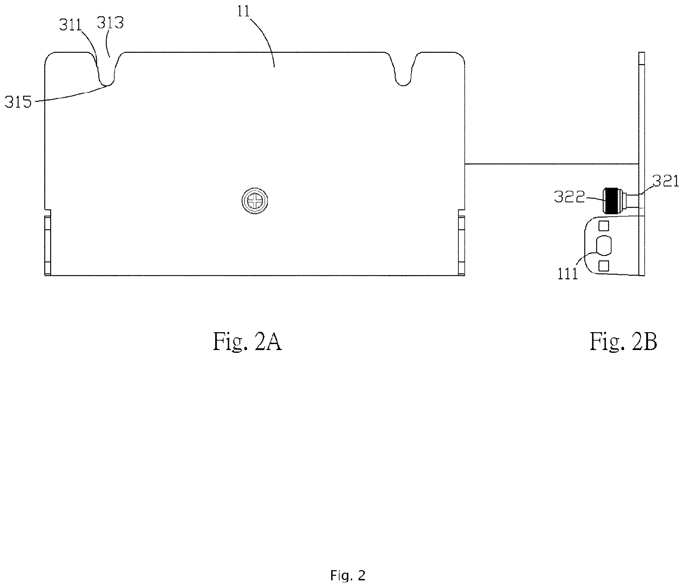

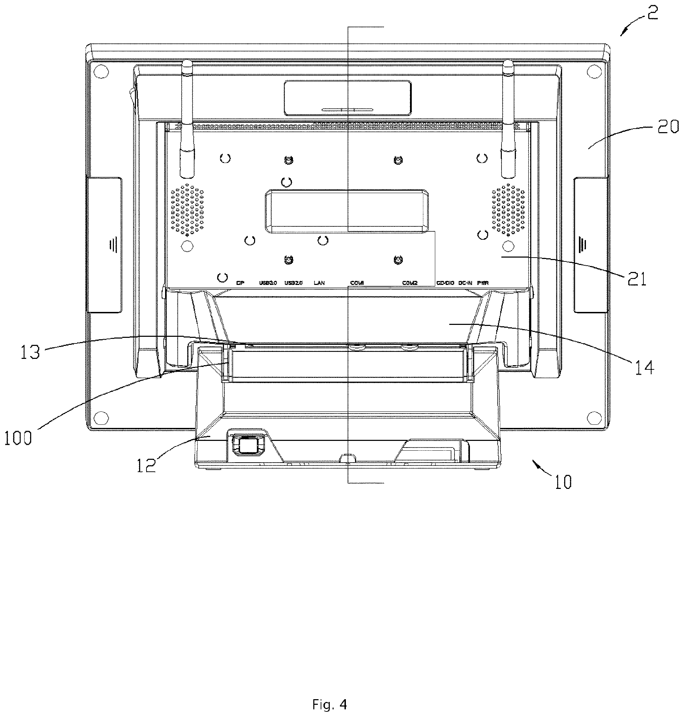

Refer to Figs. 1-5 respectively for an exploded view of a fast detachable placement seat structure for a display according to the present invention; plan views of a support plate according to the present invention; a perspective view of an assembled fast detachable placement seat structure for a display according to the present invention; a plan view of an assembled fast detachable placement seat structure for a display according to the present invention; and a cross section view of an assembled fast detachable placement seat structure for a display according to the present invention.

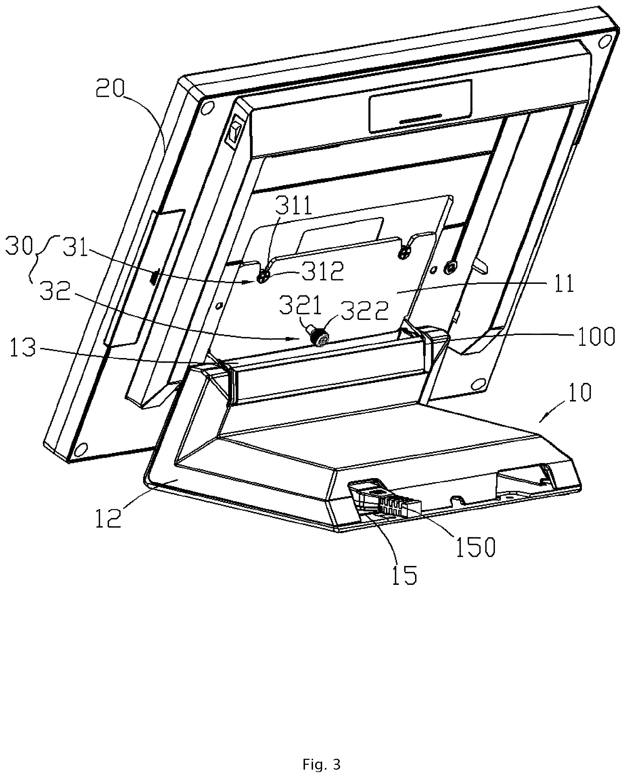

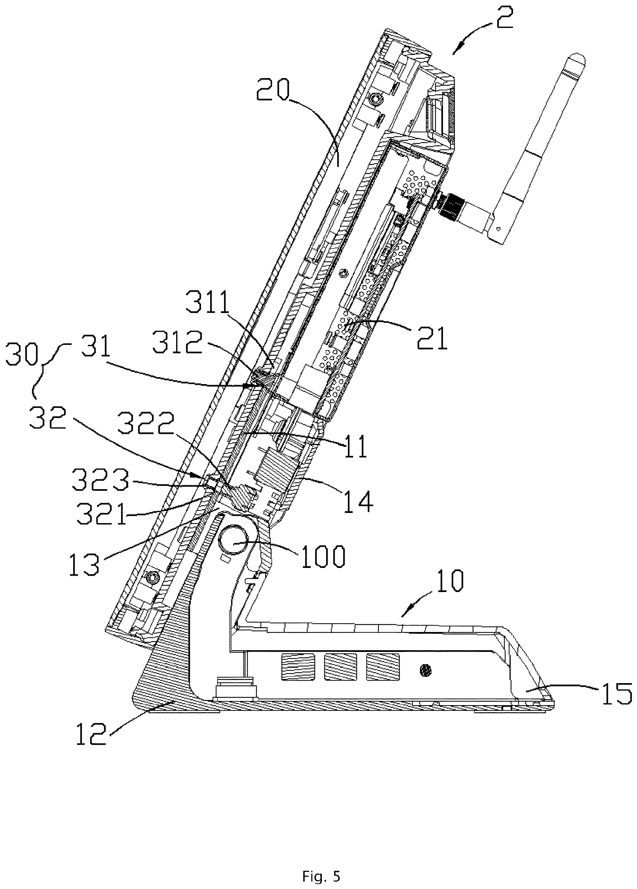

As shown in Figs. 1-5, the present invention provides a fast detachable placement seat structure for a display, comprising: a flat panel PC/ Display 20 and a placement seat 10. The placement seat 10 includes: a support plate 11, a bottom seat 12, a cable placement portion 13, and a fast detachable mechanism 30. The fast detachable mechanism 30 includes at least a fastening portion 31, and at least a locking portion 32 (Figs 3 and 5). The flat panel PC/ Display 20 is disposed in an electronic device 2. The placement seat 10 is disposed below and connected to the flat panel PC/ Display 20. Wherein, the bottom base 12 is connected to the support plate 11 to form an angle with the support plate 11, and is used for receiving circuits (not shown), and a cable inlet end 15 is disposed at one side of the bottom base 12. The cable placement portion 13 is disposed between the support plate 11 and the bottom base 12. The fast detachable mechanism 30 is disposed on the support plate 11, and is located between the support plate 11 and a back side of the flat panel PC/ Display 20. The at least a fastening portion 31 is formed by at least a recess 311 on the support plate 11, and at least a pillar 312 on the back side of the flat panel PC/ Display 20. Wherein, the pillar 312 is of a movable type, and is fixed to the screw hole piece 323 on the back side of the flat panel PC/ Display 20 through using the screw bolt 322. The at least a locking portion 32 is formed by at least a through hole 321 on the support plate 11, and at least a screw hole piece 323 on the back side of the flat panel PC/ Display 20, for a screw bolt 322 to insert through the through hole 321 and the screw hole piece 323, to be locked and fixed in the screw hole piece 323. Wherein, the screw bolt 322 is a minus screw bolt, a plus screw bolt, or a hand screw bolt, so that screw bolt 322 can be locked and unlocked through using a coin or through rotation by a hand.

As shown in Figs. 1,4,5, the flat panel PC/ Display 20 is a liquid crystal display, the electronic device 2 is of a flat type incorporating all functions into a single unit (All-In-One), and that is selected from one of the following group consisting of an industrial control instrument, a man-machine interface, a Point of Sale, a multi- function printer, a vehicle GPS, a communication device, a telephone system, an intelligent household equipment, and a medical care device.

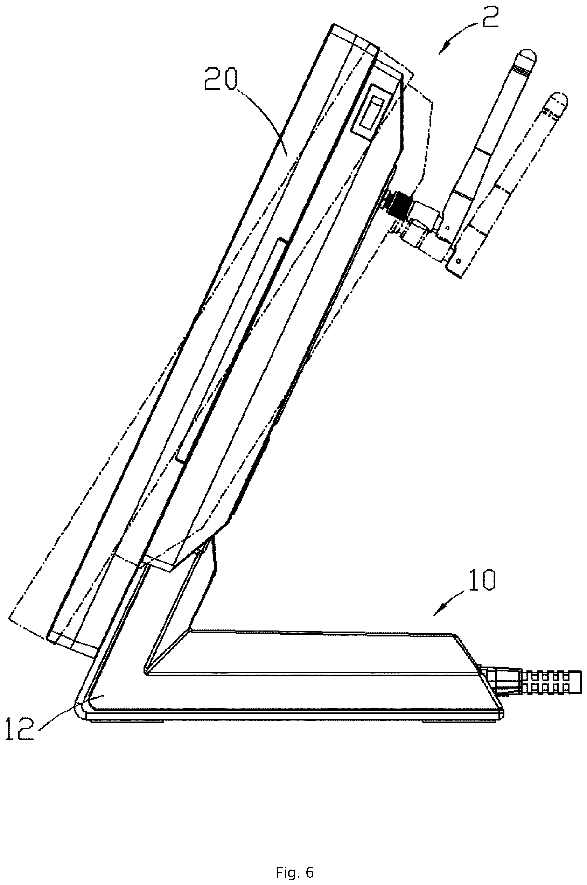

As shown in Figs. 1 to 3, two pivot hole plates 111 are disposed respectively on two sides of the support plate 11, and are connected to the bottom base 12 through a hinge 100 disposed in-between, to vary an angle between the support plate 11 and the bottom base 12, to bring the flat panel PC/ Display 20 installed on the support plate 11 into rotation, to facilitate viewing by a user (as shown in Fig. 6). As such, a cable placement portion 13 is disposed between the support plate 11 and the bottom base 12, to receive a plurality of connection cables 130 connected to a main machine 21. On the rear portion of the cable placement portion 13 is disposed a cable cover 14. The cable inlet end 15 is connected to a power cable 150 or a USB cable (not shown). But, the present invention is not limited to this.

The recesses 311 of the fastening portion 31 are located on the support plate 11 of the placement seat 10; while the pillars 312 are disposed on the back side of the flat panel PC/ Display 20 corresponding to the recesses 311. The screw hole piece 323 of the locking portion 32 is located on the back side of the flat panel PC/ Display 20; while the through hole 321 is located on the support plate 11 of the placement seat 10 corresponding to the screw hole piece 323, for the screw bolt 322 to insert through the through hole 321 and the screw hole piece 323, to be locked in the screw hole piece 323, in achieving fixing the flat panel PC/ Display 20 onto the placement seat 10.

As shown in Figs. 1 to 5, two V-shape recesses 311 are disposed respectively on a left side and a right side on an upper rim of the support plate 11, and two pillars 312 are disposed respectively at a left position and a right position on the back side of the flat panel PC/ Display 20, and correspond respectively to the two recesses 311. On an upper end of the recess 311 is provided with an opening 313, and on a lower end of the recess 311 is provided with a U-shape bottom portion 315. An opposite-contact portion 314 is provided at a lower end of a side opposite to the pillar 312. The pillar 312 can be inserted through the opening 313 to act in cooperation with the U-shape bottom portion 315 to achieve close engagement and stable placement. The screw hole piece 323 on the back side of the flat panel PC/ Display 20 is located just opposite to the through hole 321 on the support plate 11, for the screw bolt 322 to insert through the through hole 321 and the screw hole piece 323, to be locked and fixed in the screw hole piece 323.

As such, the placement seats 10 can be used extensively on the flat panel PC/ Displays 20 of the various electronic devices 2 through utilizing an All-In-One concept. In assembly, the fast detachable mechanism 30 on the support plate 11 is utilized, so that the pillars 312 on both sides of the flat panel PC/ Display 20 can be inserted easily into the respective V-shape recesses 311 on both sides of the support plate 11, to achieve close engagement and stable placement. Moreover, the screw hole piece 323 on the back side of the flat panel PC/ Display 20 is located just opposite to the through hole 321 on the support plate 11, for the screw bolt 322 to insert easily through the through hole 321, to be locked and fixed in the screw hole piece 323. In this approach, the flat panel PC/ Display 20 can be assembled and fixed to the placement seats 10 quickly without the need of using a screw driver or other tools, in achieving few components required, simple structure, easy assembly/detachment, while reducing the production cost significantly.

Due to the flexible design of the fast detachable mechanism 30, a cable placement portion 13 is formed between the support plate 11 and the bottom base 12, to receive a plurality of connection cables 130 of various types connected to a main body 21; while the cable inlet end 15 of the placement seat 10 is connected to a single power cable 150 or USB cable. As such, in case the electronic device 2 has to be replaced or repaired, the main machine 21 and flat panel PC/ Display 20 can be replaced easily and quickly, to save the time and efforts for assembly and repair.

The preferred embodiments disclosed above are not intended to be any restrictions to the scope of the present invention. Conversely, its purpose is to include the various changes and equivalent arrangements which are within the scope of the appended claims.

## Claims

1. A fast detachable placement seat structure for a display, comprising: a flat panel PC/ Display (20), disposed in an electronic device (2); and a placement seat (10), disposed below and connected to the flat panel PC/ Display (20), the placement seat (10) includes: a support plate (11), a bottom base (12), connected to the support plate (11) to form an angle with the support plate (11), and is used for receiving circuits, and a cable inlet end (15) is disposed on one side of the bottom base (12), a cable placement portion (13), disposed between the support plate (11) and the bottom base (12), and a fast detachable mechanism (30), disposed on the support plate (11), and is located between the support plate (11) and a back side of the flat panel PC/ Display (20), the fast detachable mechanism (30) includes: at least a fastening portion (31), formed by at least a recess (311) on the support plate (11), and at least a pillar (312) on the back side of the flat panel PC/ Display (20), and at least a locking portion (32), formed by at least a through hole (321) on the support plate (11), and at least a screw hole piece (323) on the back side of the flat panel PC/ Display (20), for a screw bolt (322) to insert through the through hole (321) and the screw hole piece (323), to be locked and fixed in the screw hole piece (323).

2. The fast detachable placement seat structure for a display as claimed in claim 1, wherein the flat panel PC/ Display (20) is a liquid crystal display, the electronic device (2) is of a flat type incorporating all functions into a single unit (All-In-One), and that is selected from one of the following group consisting of an industrial control instrument, a man-machine interface, a Point of Sale, a multi-function printer, a vehicle GPS, a communication device, a telephone system, an intelligent household equipment, and a medical care device.

3. The fast detachable placement seat structure for a display as claimed in claim 2, wherein the recess (311) of the fastening portion (31) is disposed on the support plate (11) of the placement seat (10), the pillar (312) is disposed on the back side of the flat panel PC/ Display (20) corresponding to the recess (311), the screw hole piece (323) of the locking portion (32) is located on the back side of the flat panel PC/ Display (20), the through hole (321) is located on the support plate (11) of the placement seat (10), for the screw bolt (322) to insert through the through hole (321) and the screw hole piece (323), to be locked and fixed in the screw hole piece (323).

4. The fast detachable placement seat structure for a display as claimed in claim 3, wherein two recesses are disposed respectively on a left side and a right side on an upper rim of the support plate (11), and two pillars (312) are disposed respectively at a left position and a right position on the back side of the flat panel PC/ Display (20), and correspond respectively to the two recesses (311), each of the two recesses (311) is of a V- shape, on an upper end of the recess (311) is provided with an opening (313), and on a lower end of the recess (311) is provided with a U-shape bottom portion (315), an opposite-contact portion (314) is provided at a lower end of a side opposite to the pillar (312), to act in cooperation with the U-shape bottom portion (315) to achieve stable placement, the screw hole piece (323) on the back side of the flat panel PC/ Display (20) is located just opposite to the through hole (321) on the support plate (11) for the screw bolt (322) to insert through the through hole (321) and the screw hole piece (323), to be locked and fixed in the screw hole piece (323).

5. The fast detachable placement seat structure for a display as claimed in claim 4, wherein the through hole (321) is a step hole, and the screw hole piece (323) on the back side of the flat panel PC/ Display (20) is formed by the through hole (321) and a screw hole plate outside and inside the back side of the flat panel PC/ Display (20) respectively, and a screw hole is provided on the screw hole piece (323).

6. The fast detachable placement seat structure for a display as claimed in claim 4, wherein the cable inlet end (15) is connected to a single power cable (150) or a USB cable, two pivot hole plates (111) are disposed respectively on both sides of the support plate (11), and are connected to the bottom base (12) through a hinge (100) disposed in-between, to vary an angle between the support plate (11) and the bottom base (12), the cable placement portion (13) is formed between the support plate (11) and the bottom base (12), to receive a plurality of cables connected to a main machine (21), and a cable cover (14) is provided at a rear portion of the cable placement portion (13).

7. The fast detachable placement seat structure for a display as claimed in claim 4, wherein the pillar (312) of the fastening portion (31) is a fixed type pillar or a movable type pillar, the fixed type pillar is connected directly to the back side of the flat panel PC/ Display (20), the movable type pillar is fixed to the screw hole piece (323) on the back side of the flat panel PC/ Display (20) through using the screw bolt (322).

8. The fast detachable placement seat structure for a display as claimed in claim 4, wherein the screw bolt (322) of the locking portion (32) is one of the following: a minus screw bolt, a plus screw bolt, and a hand screw bolt.

9. The fast detachable placement seat structure for a display as claimed in claim 2, wherein the pillar (312) of the fastening portion (31) is disposed on the support plate (11) of the placement seat (10), and the recess (311) is located on the back side of the flat panel PC/ Display (20) corresponding to the pillar (312), wherein the screw hole piece (323) of the locking portion (32) is located on the support plate (11) of the placement seat (10), the through hole (321) is located on the back side of the flat panel PC/ Display (20) corresponding to screw hole piece (323), for the screw bolt (322) to insert through the through hole (321) and the screw hole piece (323), to be locked and fixed in the screw hole piece (323).

## Patentansprüche

1. Schnell abnehmbare Platzierungssitzstruktur für ein Display, umfassend: ein Flachbildschirm - PC / Display (20), der / das in einem elektronischen Gerät (2) angeordnet ist, und eine Platzierungssitzstruktur (10), die unterhalb des Flachbildschirm - PCs / Displays (20) angeordnet und damit verbunden ist, wobei die Platzierungssitzstruktur (10) umfasst: eine Trägerplatte (11), eine Bodenbasis (12), die mit der Trägerplatte verbunden ist (11), um einen Winkel mit der Trägerplatte (11) auszubilden und die zur Aufnahme von Schaltkreisen verwendet wird, und wobei ein Kabeleintrittsende (15) an einer Seite der Bodenbasis (12) angeordnet ist, einen Kabelplatzierungsabschnit (13), der zwischen der Trägerplatte (11) und der Bodenbasis (12) angeordnet ist, und einen schnell lösbaren Mechanismus (30), der an der Trägerplatte (11) angeordnet ist und zwischen der Trägerplatte (11) und einer Rückseite des Flachbildschirm - PCs / Displays (20) angeordnet ist, wobei der schnell lösbare Mechanismus (30) umfasst: mindestens einen Befestigungsabschnitt (31), der durch mindestens eine Aussparung (311) auf der Trägerplatte (11) ausgebildet ist und mindestens eine Säule (312) auf der Rückseite des Flachbildschirm - PCs / Displays (20) und mindestens einen Verriegelungsabschnitt (32), der durch mindestens ein Durchgangsloch (321) an der Trägerplatte (11) ausgebildet ist, und mindestens einen Schraublochabschnitt (323) an der Rückseite des Flachbildschirm - PCs / Displays (20), damit ein Schraubbolzen (322) durch das Durchgangsloch (321) und den Schraublochabschnitt (323) gesteckt wird, um in dem Schraublochabschnitt (323) verriegelt und fixiert zu werden.

2. Schnell abnehmbare Platzierungssitzstruktur für ein Display gemäß Anspruch 1, bei der der / das Flachbildschirm - PC / Display (20) eine Flüssigkristallanzeige ist, wobei das elektronische Gerät (2) von einem flachen Typ ist, der alle Funktionen in einer einzigen Einheit umfasst (All-In-One) und aus einem aus der folgenden Gruppen ausgewählt ist, die aus einem industriellen Steuerungsinstrument, einer Mensch-Maschinen-Schnittstelle, einer Verkaufsstelle, einem Multifunktionsdrucker, einem Fahrzeug-GPS, einem Kommunikationsgerät, einer Telefonanlage, einem intelligenten Haushaltsgerät und einem medizinischen Pflegegerät besteht.

3. Schnell abnehmbare Platzierungssitzstruktur für ein Display gemäß Anspruch 2, bei der die Aussparung (311) des Befestigungsabschnitts (31) an der Trägerplatte (11) des Platzierungssitzes (10) angeordnet ist, wobei die Säule (312) an der Rückseite des Flachbildschirm - PC / Displays (20 entsprechend der Aussparung (311)) angeordnet ist, wobei der Schraubenlochabschnitt (323) des Verriegelungsabschnitts (32) an der Rückseite des Flachbildschirm - PC / Displays (20) angeordnet ist, wobei das Durchgangsloch (321) an der Trägerplatte (11) des Platzierungssitzes (10) angeordnet ist, damit der Schraubbolzen (322) durch das Durchgangsloch (321) und das Schraublochelement (323) gesteckt ist, um in dem Schraublochelement (323) verriegelt und fixiert zu werden.

4. Schnell abnehmbare Platzierungssitzstruktur für ein Display gemäß Anspruch 3, bei der zwei Aussparungen jeweils an einer linken Seite und einer rechten Seite an einem oberen Rand der Trägerplatte (11) angeordnet sind und zwei Säulen (312) jeweils an einer linken Position und einer rechten Position auf der Rückseite des Flachbildschirm - PC / Displays (20) angeordnet sind und jeweils den beiden Aussparungen (311) entsprechen, wobei jede der beiden Aussparungen (311) eine V - Form aufweist, wobei ein oberes Ende der Aussparung (311) mit einer Öffnung (313) versehen ist und ein unteres Ende der Aussparung (311) mit einem U - förmigen Bodenabschnitt (315) versehen ist, wobei ein gegenüberliegender Kontaktabschnitt (314) an einem unteren Ende einer Seite gegenüber der Säule (312) bereitgestellt ist, um mit dem U - förmigen Bodenabschnitt (315) zusammenzuwirken, um eine stabile Platzierung zu erreichen, wobei das Schraublochelement (323) an der Rückseite des Flachbildschirm - PC / Displays (20) genau gegenüber dem Durchgangsloch (321) an der Trägerplatte (11) angeordnet ist, damit der Schraubbolzen (322) durch das Durchgangsloch (321) und Schraublochelement (323) gesteckt ist, um in dem Schraublochelement (323) verriegelt und fixiert zu werden.

5. Schnell abnehmbare Platzierungssitzstruktur für ein Display gemäß Anspruch 4, bei der das Durchgangsloch (321) ein Stufenloch ist und das Schraublochelement (323) an der Rückseite des Flachbildschirm - PC / Displays (20) durch das Durchgangsloch (321) und eine Schraubenlochplatte jeweils außerhalb und innerhalb der Rückseite des Flachbildschirm - PC / Displays (20) ausgebildet ist und ein Schraubloch an dem Schraublochelement (323) bereitgestellt ist.

6. Schnell abnehmbare Platzierungssitzstruktur für ein Display gemäß Anspruch 4, bei der das Kabeleinlassende (15) mit einem einzelnen Stromkabel (150) oder einem USB - Kabel verbunden ist, wobei zwei Drehlochplatten (111) entsprechend an beiden Seiten der Trägerplatte (11) angeordnet sind und mit der Bodenbasis (12) durch ein dazwischen angeordnetes Scharnier (100) verbunden sind, um einen Winkel zwischen der Trägerplatte (11) und der Bodenbasis (12) zu variieren, wobei der Kabelplatzierungsabschnitt (13) zwischen der Trägerplatte (11) und der Bodenbasis (12) ausgebildet ist, um eine Vielzahl von Kabeln aufzunehmen, die mit einer Hauptmaschine (21) verbunden sind, und wobei eine Kabelabdeckung (14) an einer Rückseite des Kabelplatzierungsabschnitts (13) bereitgestellt ist.

7. Schnell abnehmbare Platzierungssitzstruktur für ein Display gemäß Anspruch 4, bei der die Säule (312) des Befestigungsabschnitts (31) eine Säule vom festen Typ oder eine Säule vom beweglichen Typ ist, wobei die Säule vom festen Typ direkt mit der Rückseite des Flachbildschirm - PC / Displays (20) verbunden ist, wobei die bewegliche Säule an dem Schraublochelement (323) an der Rückseite des Flachbildschirm - PC / Displays (20) durch den Gebrauch des Schraubbolzens (322) fixiert ist.

8. Schnell abnehmbare Platzierungssitzstruktur für ein Display gemäß Anspruch 4, bei der der Schraubbolzen (322) des Verriegelungsabschnitts (32) einer der folgenden ist: ein Minusschraubbolzen, ein Plusschraubbolzen und ein Handschraubbolzen.

9. Schnell abnehmbare Platzierungssitzstruktur für ein Display gemäß Anspruch 2, bei der die Säule (312) des Befestigungsabschnitts (31) an der Trägerplatte (11) des Platzierungssitzes (10) angeordnet ist und die Aussparung (311) an der Rückseite des Flachbildschirm - PC / Displays (20) entsprechend der Säule (312) angeordnet ist, wobei das Schraublochelement (323) des Verriegelungsabschnitts (32) an der Trägerplatte (11) des Platzierungssitzes (10) angeordnet ist, wobei das Durchgangsloch (321) an der Rückseite des Flachbildschirm - PC / Displays (20) entsprechend zu dem Schraublochelement (323) angeordnet ist, damit der Schraubbolzen (322) durch das Durchgangsloch (321) und das Schraublochelement (323) gesteckt ist, um im Schraublochelement (323) verriegelt und fixiert zu werden.

## Revendications

1. Structure de siège de placement détachable rapidement pour un affichage, comprenant: un PC/affichage à panneau plat (20), disposé dans un dispositif électronique (2); et un siège de placement (10), disposé sous et raccordé au PC/affichage à panneau plat (20), le siège de placement (10) inclut: une plaque de support (11), une base inférieure (12), raccordée à la plaque de support (11) pour former un angle avec la plaque de support (11), et est utilisée pour la réception de circuits, et une extrémité d'entrée de câble (15) est disposée sur un côté de la base inférieure (12), une portion de placement de câble (13), disposée entre la plaque de support (11) et la base inférieure (12), et un mécanisme détachable rapidement (30), disposé sur la plaque de support (11), et est situé entre la plaque de support (11) et un côté arrière du PC/affichage à panneau plat (20), le mécanisme rapidement détachable (30) inclut: au moins une portion de fixation (31), formée par au moins un évidement (311) sur la plaque de support (11), et au moins un pilier (312) sur le côté arrière du PC/affichage à panneau plat (20), et au moins une portion de verrouillage (32), formée par au moins un trou débouchant (321) sur la plaque de support (11), et au moins une pièce de trou de vis (323) sur le côté arrière du PC/affichage à panneau plat (20), pour qu'un boulon fileté (322) à insérer au travers du trou débouchant (321) et la pièce de trou de vis (323), soit verrouillé et fixé dans la pièce de trou de vis (323).

2. Structure de siège de placement détachable rapidement pour un affichage selon la revendication 1, dans laquelle le PC/affichage à panneau plat (20) est un affichage à cristaux liquides, le dispositif électronique (2) est d'un type plat incorporant toutes les fonctions dans une seule unité (tout en un), et qui est sélectionné à partir d'un du groupe suivant constitué par un instrument de commande industriel, une interface homme-machine, un point de vente, une imprimante multifonctions, un GPS de véhicule, un dispositif de communication, un système de téléphone, un équipement ménager intelligent, et un dispositif de soins médicaux.

3. Structure de siège de placement détachable rapidement pour un affichage selon la revendication 2, dans laquelle l'évidement (311) de la portion de fixation (31) est disposé sur la plaque de support (11) du siège de placement (10), le pilier (312) est disposé sur le côté arrière du PC/affichage à panneau plat (20) correspondant à l'évidement (311), la pièce de trou de vis (323) de la portion de verrouillage (32) est située sur le côté arrière du PC/affichage à panneau plat (20), le trou débouchant (321) est situé sur la plaque de support (11) du siège de placement (10), pour que le boulon fileté (322) à insérer au travers du trou débouchant (321) et de la pièce de trou de vis (323), soit verrouillé et fixé dans la pièce de trou de vis (323).

4. Structure de siège de placement détachable rapidement pour un affichage, selon la revendication 3, dans laquelle deux évidements sont disposés respectivement sur un côté gauche et un côté droit sur un bord supérieur de la plaque de support (11), et deux piliers (312) sont disposés respectivement au niveau d'une position gauche et une position droite sur le côté arrière du PC/affichage à panneau plat (20), et correspondent respectivement aux deux évidements (311), chacun des deux évidements (311) est d'une forme de V, sur une extrémité supérieure de l'évidement (311) est doté d'une ouverture (313), et sur une extrémité inférieure de l'évidement (311) est doté d'une portion inférieure en forme de U (315), une portion de contact opposée (314) est prévue au niveau d'une extrémité inférieure d'un côté opposé au pilier (312), pour agir en coopération avec la portion inférieure en forme de U (315) afin d'atteindre le placement stable, la pièce de trou de vis (323) sur le côté arrière du PC/affichage à panneau plat (20) est située juste à l'opposé du trou débouchant (321) sur la plaque de support (11) pour que le boulon fileté (322) à insérer au travers du trou débouchant (321) et la pièce de trou de vis (323), soit verrouillé et fixé dans la pièce de trou de vis (323).

5. Structure de siège de placement détachable rapidement pour un affichage, selon la revendication 4, dans laquelle le trou débouchant (321) est un trou étagé, et la pièce de trou de vis (323) sur le côté arrière du PC/affichage à panneau plat (20) est formée par le trou débouchant (321) et une plaque de trou de vis à l'extérieur et l'intérieur du côté arrière du PC/affichage à panneau plat (20) respectivement, et un trou de vis est prévu sur la pièce de trou de vis (323).

6. Structure de siège de placement détachable rapidement pour un affichage, selon la revendication 4, dans laquelle l'extrémité d'entrée de câble (15) est raccordée à un seul câble d'alimentation (150) ou un câble USB, deux plaques de trou de pivotement (111) sont disposées respectivement sur les deux côtés de la plaque de support (11), et sont raccordées à la base inférieure (12) au travers d'une articulation (100) disposée entre elles, pour varier un angle entre la plaque de support (11) et la base inférieure (12), la portion de placement de câble (13) est formée entre la plaque de support (11) et la base inférieure (12), pour recevoir une pluralité de câbles raccordés à une machine principale (21), et un couvre-câble (14) est prévu au niveau d'une portion arrière de la portion de placement de câble (13).

7. Structure de siège de placement détachable rapidement pour un affichage selon la revendication 4, dans laquelle le pilier (312) de la portion de fixation (31) est un pilier de type fixe ou un pilier de type mobile, le pilier de type fixe est raccordé directement au côté arrière du PC/affichage à panneau plat (20), le pilier de type mobile est fixé à la pièce de trou de vis (323) sur le côté arrière du PC/affichage à panneau plat (20) au travers de l'utilisation du boulon fileté (322).

8. Structure de siège de placement détachable rapidement pour un affichage selon la revendication 4, dans laquelle le boulon fileté (322) de la portion de verrouillage (32) est un de ce qui suit: un boulon fileté négatif, un boulon fileté positif, et un boulon fileté à main.

9. Structure de siège de placement détachable rapidement pour un affichage, selon la revendication 2, dans laquelle le pilier (312) de la portion de fixation (31) est disposé sur la plaque de support (11) du siège de placement (10), et l'évidement (311) est situé sur le côté arrière du PC/affichage à panneau plat (20) correspondant au pilier (312), dans laquelle la pièce de trou de vis (323) de la portion de verrouillage (32) est située sur la plaque de support (11) du siège de placement (10), le trou débouchant (321) est situé sur le côté arrière du PC/affichage à panneau plat (20) correspondant à la pièce de trou de vis (323) pour que le boulon de vis (322) à insérer au travers du trou débouchant (321) et la pièce de trou de vis (323), soit verrouillé et fixé dans la pièce de trou de vis (323).
